# EUROPEAN PATENT SPECIFICATION

(11) **EP 3 148 861 B1**
(45) Date of publication and mention of the grant of the patent: **17.10.2018**
(21) Application number: 15726139.7
(22) Date of filing: 29.05.2015
(51) Int. Cl.: B62D 15/02

(54) **OSCILLATORY FEEDBACK CONTROL IN A VEHICLE STEERING SYSTEM**
RÜCKMELDESCHWINGUNGSKONTROLLE IN EINEM FAHRZEUGLENKSYSTEM
CONTRÔLE D'OSCILLATION D'INFORMATION RETOUR DANS UN SYSTÈME DE DIRECTION DE VÉHICULE

(30) Priority: 30.05.2014 US 201414291934
(43) Date of publication of application: 05.04.2017
(73) Proprietor: Jaguar Land Rover Limited, Coventry, Warwickshire CV3 4LF (GB)
(72) Inventor: LICKFOLD, David, Coventry Warwickshire CV3 4LF (GB); WHITTLE, Anthony, Coventry Warwickshire CV3 4LF (GB); KEWLEY, John, Coventry Warwickshire CV3 4LF (GB); TEMPLE, Nick, Coventry Warwickshire CV3 4LF (GB)
(74) Representative: Bhimani, Alan
(86) International application number: PCT/EP2015/062030
(87) International publication number: WO 2015/181377

(56) References cited:
- EP-A2- 1 873 034
- DE-A1-102004 047 861

## Description

### TECHNICAL FIELD

This invention relates to oscillatory feedback provided through vehicle steering and particularly, but not exclusively, to controlling the provision of oscillatory feedback through vehicle steering such that the provision of such feedback is automatically inhibited when certain criteria is met. Aspects of the invention relate to a method, to a non-transitory computer-readable storage medium, to a system, to an electronic controller, to a vehicle, to a vehicle steering system, and to an electric power assisted steering (EPAS) system.

### BACKGROUND

Various means are known in the art for providing feedback to drivers of motor vehicles about the state of the vehicle and/or its surroundings. For instance, feedback may be used to warn drivers when one or more particular defined conditions exist, such as, for example, when the vehicle is departing from the lane in which it is travelling or it is detected that a driver is drowsy.

This feedback may take any number of forms, one being oscillatory feedback. Oscillatory feedback, which may include, for example, haptic and/or audible feedback, has been found to be effective in providing warnings to drivers when certain defined conditions exist.

Oscillatory feedback may be delivered in a number of ways. One way is via a vehicle's steering input device, e.g., steering wheel. In particular, the steering wheel may be caused to vibrate to provide a warning to be sensed by the driver's hands. It is known to provide vibrations with dedicated vibration means, such as an electric motor and imbalance, within the steering wheel or within the steering column, however, the additional components add weight and complexity to the vehicle. EP 1 873 034 A2 discloses a method, for controlling the provision of oscillatory feedback through a steering system of a vehicle, comprising: receiving a request to provide oscillatory feedback through the steering system of the vehicle; acquiring a value of a steering angle-related parameter; comparing the value of the steering angle-related parameter to a predetermined threshold value; and when the value of the steering angle-related parameter is above the predetermined threshold value, automatically inhibiting the provision of the oscillatory feedback. While providing oscillatory feedback certainly serves an important purpose of warning drivers that certain conditions exist, the provision of such feedback is not without its disadvantages. For example, providing oscillatory feedback in an instance wherein the driver is clearly controlling the vehicle may be undesirable.

Accordingly, it is an aim of the present invention to address, for example, the disadvantages identified above.

### SUMMARY OF THE INVENTION

According to one aspect of the invention for which protection is sought, there is provided a method for controlling the provision of oscillatory feedback through a steering system of a vehicle. In an embodiment, the method comprises: receiving a request to provide oscillatory feedback through the steering system of the vehicle; acquiring a value of a steering angle-related parameter; obtaining a value of an applied steering torque; comparing the value of the steering angle-related parameter to a predetermined threshold value; comparing the value of the applied steering torque to a predetermined steering torque threshold value; and when the value one or both of the steering angle-related parameter and the applied steering torque is above the predetermined threshold values to which they are compared, automatically inhibiting the provision of the oscillatory feedback.

According to another aspect of the invention for which protection is sought, there is provided a system for controlling the provision of oscillatory feedback through a steering system of a vehicle, comprising: means for receiving a request to provide oscillatory feedback through the steering system of the vehicle; means for acquiring a value of a steering angle-related parameter; means for obtaining a value of an applied steering torque; means for comparing the value of the steering angle-related parameter to a predetermined threshold value; means for comparing the value of the applied steering torque to a predetermined steering torque threshold value; and means for automatically inhibiting the provision of the oscillatory feedback when the value of one or both of the steering angle-related parameter and the applied steering torque is above the predetermined threshold values to which they are compared. In an embodiment, the receiving, acquiring, comparing, and inhibiting means comprise an electronic processor having one or more electrical inputs for receiving at least the request to provide oscillatory feedback, and an electronic memory device electrically coupled to the electronic processor. The electronic processor is configured to access the memory device and to execute the instructions stored therein such that it is configured to: receive the request to provide oscillatory feedback; acquire the value of the steering angle-related parameter; compare the value of the steering angle-related parameter to the predetermined threshold value; and automatically inhibit the provision of the oscillatory feedback when the value of the steering angle-related parameter is above the predetermined threshold value.

According to a still further aspect of the invention for which protection is sought, there is provided an electronic controller for a vehicle having a storage medium associated therewith storing instructions therein that when executed by the controller causes the controlling of the provision of oscillatory feedback through a steering system of the vehicle in accordance with the method of: receiving a request to provide oscillatory feedback through the steering system of the vehicle; acquiring a value of a steering angle-related parameter; obtaining a value of an applied steering torque; comparing the value of the steering angle-related parameter to a predetermined threshold value; comparing the value of the applied steering torque to a predetermined steering torque threshold; and when the value of one or both of the steering angle-related parameter and the applied steering torque is above the predetermined threshold values to which they are compared, automatically inhibiting the provision of the oscillatory feedback.

According to yet another aspect of the invention for which protection is sought, there is provided a vehicle comprising the system or electronic controller described herein.

According to a further aspect of the invention for which protection is sought, there is provided a vehicle steering system comprising the system or electronic controller described herein.

According to a yet further aspect of the invention for which protection is sought, there is provided an electric power assisted steering (EPAS) system for a vehicle comprising the system or electronic controller described herein.

According to a still further aspect of the invention for which protection is sought, there is provided a non-transitory, computer-readable storage medium storing instructions thereon that when executed by one or more electronic processors causes the one or more processors to carry out the method described herein.

Optional features of the various aspects of the invention are set out below in the dependent claims.

At least some embodiments of the present invention have the advantage that when it is determined that one or more defined conditions may exist for which oscillatory feedback would ordinarily be provided, but it is further determined that the vehicle is being controlled by the driver, provision of the feedback is inhibited so as to not distract or disturb the driver.

Within the scope of this application it is expressly intended that the various aspects, embodiments, examples, and alternatives set out in the preceding paragraphs, in the claims, and/or in the following description or drawings, and in particular the individual features thereof, may be taken independently or in any combination. That is, all embodiments and/or features of any embodiment can be combined in any way and/or combination, unless such features are incompatible. The applicant reserves the right to change any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, wherein like designations denote like elements, and in which:
Figure 1 is a schematic side view of a vehicle comprising an illustrative embodiment of a vehicle steering system;
Figure 2 is a schematic view of the vehicle steering system illustrated in Figure 1;
Figure 3 is a schematic view of an illustrative embodiment of a motor and rack and pinion coupling of the steering system illustrated in Figure 2;
Figures 4-6 are flow diagrams depicting various steps of illustrative embodiments of a method for controlling the provision of oscillatory feedback through a steering system of a vehicle; and
Figure 7 is a graph showing an example of an applied steering torque and a steering angle-related parameter over time during a cornering event of a vehicle.

### DETAILED DESCRIPTION

The systems and methods described herein may be used to automatically control the provision of oscillatory feedback through the steering system of a vehicle. In an embodiment, the systems and methods receive a request to provide oscillatory feedback through the steering system of the vehicle, acquire a value of a steering angle-related, compare the value of the steering angle-related parameter to a predetermined threshold value, and when the value of the steering angle-related parameter is above the threshold value, automatically inhibit the provision of the oscillatory feedback.

References herein to a block such as a function block are to be understood to include reference to software code for performing the function or action specified in which an output is provided responsive to one or more inputs. The code may be in the form of a software routine or function called by a main computer program, or may be code forming part of a flow of code not being a separate routine or function. Reference to function blocks is made for ease of explanation of the manner of operation of a control system according to an embodiment of the present invention.

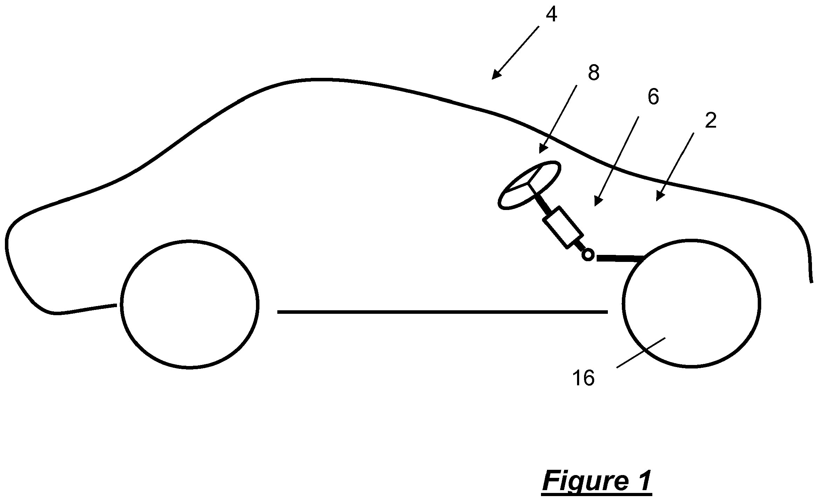

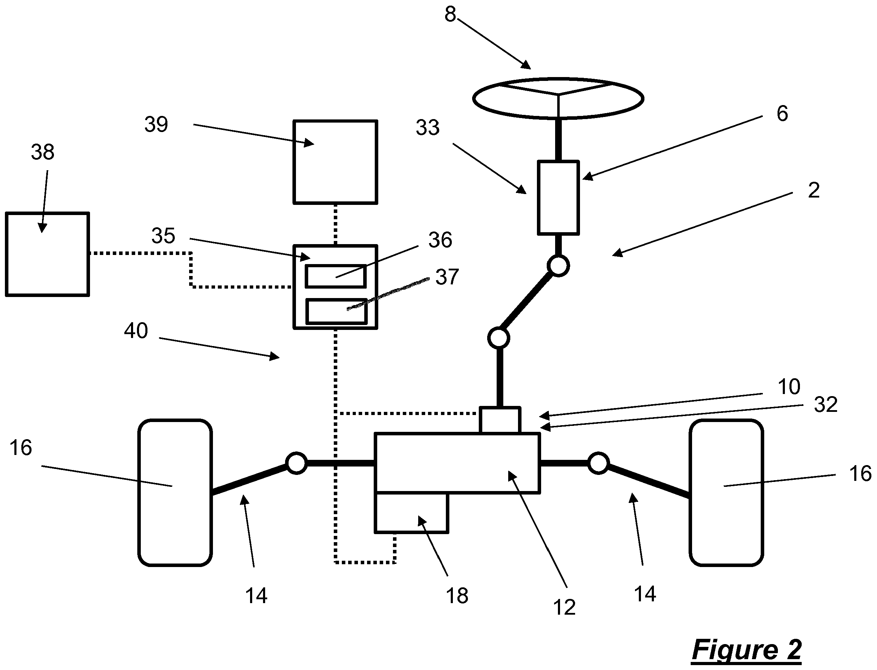

With reference to Figures 1 and 2, there is shown a steering system 2 of a vehicle 4. Although the following description is provided in the context of the particular vehicle illustrated in Figures 1 and 2, it will be appreciated that this vehicle is merely an example and that other vehicles may certainly be used instead. For instance, in various embodiments, the methods and systems described herein may be used with any type of vehicle having an automatic, manual, or continuously variable transmission, including traditional vehicles, hybrid electric vehicles (HEVs), extended-range electrical vehicles (EREVs), battery electric vehicles (BEVs), passenger cars, sports utility vehicles (SUVs), cross-over vehicles, and trucks, to cite a few possibilities. In any event, according to an illustrative embodiment, the steering system 2 comprises a rotatable steering column 6 coupled at a proximal end to a driver steering input device in the form of a steering wheel 8. At an opposed, distal end, the steering column 6 comprises a pinion 10.

In Figure 1, the distal end of steering column 6 and distal components of steering system 2 linked thereto are not shown in the interest of clarity. Referring now therefore specifically to the illustrative embodiment illustrated in Figure 2, a steering member in the form of a rack bar 12 is co-operable and mechanically coupled with steering column 6, and pinion 10 thereof, in particular, such that rotary motion of steering column 6 causes linear motion of rack bar 12, and linear motion of rack bar 12 causes rotary motion of steering column 6. Furthermore, in the illustrated embodiment, rack bar 12 is coupled via first and second tie rod assemblies 14 to first and second wheels 16, such that linear motion of rack bar 12 causes first and second wheels 16 to be steered. Wheels 16 may thus be steered by rotation of steering wheel 8, which leads to rotation of steering column 6, which in turn causes linear movement of rack bar 12 and steering of wheels 16.

In an embodiment, steering of wheels 16 is assisted by an actuator in the form of an electric steering assistance motor 18 coupled to, for example, rack bar 12. In such an embodiment, steering system 2 is thus an Electric Power Assisted Steering (EPAS or EPS) system, or vehicle 4 at least includes an EPAS system that is used in conjunction with steering system 2.

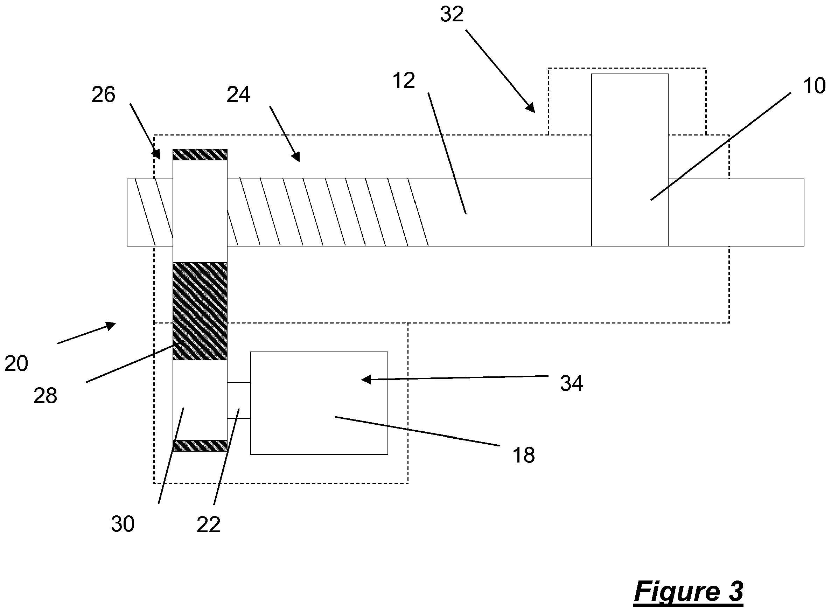

Referring now to Figure 3, in an illustrative embodiment, steering assistance motor 18 is coupled to rack bar 12 in a parallel-axis arrangement. In particular, rack bar 12 is linearly movable along a first axis, and electric motor 18 comprises a rotor rotatable about a second axis, the first and second axes being generally parallel. For purposes of this disclosure, "generally parallel" is intended to include instances where the first and second axes are exactly parallel, and those instances wherein the axes are not exactly parallel but are nonetheless suitably arranged such that rack bar 12 and motor 18 operate as intended (e.g., within an acceptable tolerance of the components). It will be appreciated, that while a parallel-axis arrangement of rack bar 12 and motor 18 has been described, the present invention is not intended to be limited to any particular arrangement(s) of motor 18 and rack bar 12, as any suitable arrangement may be used, including those in which the axes of the motor 18 and rack bar 12 may not be parallel.

Referring particularly to the embodiment depicted in Figure 3, steering assistance motor 18 is coupled to rack bar 12 via a coupling 20 that translates rotary movement of a rotor 22 of motor 18 into linear force upon rack bar 12. In the illustrated embodiment, rack bar 12 comprises a screw thread 24 and a fixedly-positioned ball assembly 26. Ball assembly 26 is configured to be driven by motor 18 and is engaged with screw thread 24 of rack bar 12 such that it acts as a nut. Motor 18 is therefore able to impart linear force and movement to rack bar 12 by rotating ball assembly 26. In an embodiment, ball assembly 26 is driven by motor 18 via a toothed belt 28, and rotor 22 of motor 18 comprises a pinion 30 for engaging toothed belt 28.

Referring again to Figure 2, steering assistance motor 18 assists in providing torque required to control the direction of steered wheels 16. One or more torque sensors 32 in the region of pinion 10 may be used to monitor, sense, detect, measure, or otherwise determine any steering torque that is indicative of a steering input provided by the driver through steering wheel 8. Torque sensor(s) 32 may comprise any suitable torque sensor known in the art that is capable of determining an amount of steering torque that is being applied in dependence on a driver steering input. Steering system 2 may further include one or more steering angle sensor(s) 33 for monitoring, sensing, detecting, measuring, or otherwise determining one or more steering angle-related parameters indicative of a steering input provided by the driver of vehicle 10. Examples of steering angle-related parameters may include one or more of: a steering angle imparted to a component of steering system 2, for example, steering column 6; a change in an imparted steering angle; and/or a rate of change of an imparted steering angle, to cite a few possibilities. In an embodiment, steering angle sensor 33 is configured to provide an initial steering angle value that may be used as a benchmark or reference value for monitoring one or more steering angle-related parameters during operation of vehicle 10. Steering angle sensor 33 may comprise any suitable torque sensor known in the art that is capable of measuring a steering angle in dependence on a driver steering input. Furthermore, and as shown in Figure 3, motion of rack bar 12 is detected by a rotor position sensor 34 (e.g., a rotary position sensor) within or associated with motor 18. In an embodiment, information provided by position sensor 34 may also be used in conjunction with information provided by steering angle sensor 33 (e.g., an initial steering wheel angle value) to monitor or otherwise determine one or more steering angle-related parameters, such as, for example, those described elsewhere herein, during operation of vehicle 10.

In any event, a steering control means 35 in the form an electronic controller (i.e., controller 35) may be provided that receives information from, for example, one or more of sensors 32-34 and, among potentially other things, calculates an amount of assistive torque to apply. Controller 35 also commands or controls motor 18 via, for example, a controller area network (CAN) bus, a system management bus (SMBus), a proprietary communication link, or using another suitable communication technique, to apply that assistive torque.

It is to be understood that electronic controller 35 described herein can comprise a control unit or computational device having one or more electronic processors (e.g., a microprocessor, a microcontroller, an application specific integrated circuit (ASIC), etc.), and that system 2 may comprise a single control unit or computational device or alternatively different functions of controller 35 may be embodied in, or hosted in, different control units or computational devices. As used herein, the terms "control unit," "controller," and "computational device" will be understood to include a single control unit, controller, or computational device, as well as a plurality of control units, controllers, or computational devices collectively operating to provide the required control functionality. A set of instructions could be provided which, when executed, cause controller 35 to implement the control techniques described herein (including some or all of the functionality of the methodology described herein). The set of instructions could be embedded in said one or more electronic processors of controller 35; or alternatively, could be provided as software to be executed in said controller 35. A first controller may be implemented in software run on one or more processors. One or more other controllers may be implemented in software run on one or more processors, optionally the same one or more processors as the first controller. Other arrangements are also useful.

In an illustrative embodiment such as that shown in Figure 2, controller 35 comprises an electronic processor 36 having one or more electrical inputs and one or more electrical outputs. Electronic processor 36 may comprise any suitable electronic processor (e.g., a microprocessor, a microcontroller, an ASIC, etc.) that is configured to execute electronic instructions. Controller 35 further includes an electronic memory device 37 that is either part of, or electrically connected to and accessible by, processor 36. Electronic memory device 37 may comprise any suitable memory device and may store a variety of data, information, and/or instructions therein or thereon. In an embodiment, memory device 37 has information and instructions for software, firmware, programs, algorithms, scripts, applications, information etc. stored therein or thereon that may govern all or part of the methodology described herein. Processor 36 may access memory device 37 and execute and/or use the information and/or instructions stored therein or thereon to carry out or perform some or all of the functionality and methodology describe herein. Alternatively, some or all of the aforementioned instructions/information may be embedded in a computer-readable storage medium (e.g. a non-transitory or non-transient storage medium) that may comprise any mechanism for storing information in a form readable by a machine or electronic processors/computational devices, including, without limitation: a magnetic storage medium (e.g. floppy diskette); optical storage medium (e.g. CD-ROM); magneto optical storage medium; read only memory (ROM); random access memory (RAM); erasable programmable memory (e.g. EPROM ad EEPROM); flash memory; or electrical or other types of medium for storing such information/instructions.

In addition to the above, controller 35 may also be electronically connected to other components of system 2 or vehicle 4 (e.g., sensor(s), vehicle systems, etc. described above and below) via suitable communications (e.g. CAN bus, SMBus, a proprietary communication link, or through some other arrangement known in the art) and can interact with them when or as required.

It will be appreciated that in addition to or in lieu of one or more of sensors 32-34 described above, steering system 2 or vehicle 4 (e.g., a system of vehicle 4 other than steering system 2) may include any number of different sensors, components, devices, modules, systems, etc., configured to monitor, sense, detect, measure, or otherwise determine a variety of parameters. These may include, for example, one or more of: steering column torque sensor(s) for monitoring, sensing, detecting, measuring, or otherwise determining steering torque imparted to steering column 6; vehicle speed sensor(s) for monitoring, sensing, detecting, measuring, or otherwise determining the speed of the vehicle 4; suspension articulation sensor(s) for monitoring, sensing, detecting, measuring, or otherwise determining suspension articulation; and/or proximity sensor(s) for monitoring, sensing, detecting, measuring, or otherwise determining proximity of the vehicle 4 to another one or more of a moving or stationary object, and which may include, for example, forward or rearward looking radar or LIDAR sensors, ultrasonic sensors or the like.

The sensors of system 2 or vehicle 4 may provide information that can be used by the methodology described herein, and may be embodied in hardware, software, firmware, or some combination thereof. The sensors may directly sense or measure the conditions or parameters for which they are provided, or they may indirectly evaluate such conditions/parameters based on information provided by other sensors, components, devices, modules, systems, etc. (e.g., the value of a particular parameter may be derived from information provided by one or more sensors as opposed to comprising the information itself). Further these sensors may be directly coupled to controller 35, indirectly coupled thereto via other electronic devices, vehicle communications bus, network, etc., or coupled in accordance with some other suitable arrangement known in the art.

In addition to being configured to provide assistive torque as described above, in at least some embodiments, motor 18 may also be controlled or commanded by controller 35 to generate oscillatory feedback that is provided or communicated to the driver of vehicle 4 via one or more components of steering system 2. In an illustrative embodiment, controller 35 is configured to receive a request to provide oscillatory feedback through steering system 2 and in dependence thereon, to send an oscillation command to motor 18 to impart an oscillating force to rack bar 12 or another component of steering system 2 operatively coupled to motor 18.

The request to provide oscillatory feedback may take a number of forms. In an illustrative embodiment, the request comprises an electrical signal representative of an actual command to provide oscillatory feedback received from a component or system of vehicle 4 that is configured to determine whether one or more defined conditions exist. In other words, when the component or system configured to determine whether one or more defined conditions exist determines that the defined condition(s) does in fact exist, it sends an electrical signal commanding the provision of oscillatory feedback to controller 35 via, for example, a CAN bus or using another suitable communication technique. In another illustrative embodiment, the request comprises an electrical signal indicative of the existence of one or more defined conditions received from a component or system of vehicle 4 configured to determine whether the one or more defined conditions exist. In other words, when the component or system configured to determine whether one or more defined conditions exist determines that the defined condition(s) does in fact exist, it sends an indicator or warning signal to controller 35 via, for example, a CAN bus or using another suitable communication technique, that informs controller 35 that the condition exists. In yet another illustrative embodiment, controller 35 may be configured to determine whether one or more defined conditions exist. In such an embodiment, the request may comprise an electrical signal received from a sensor of vehicle 4 or another vehicle component either directly or indirectly via, for example, a CAN bus or using another suitable communication technique, that is representative of a value of a particular parameter that is indicative of the existence of one or more defined conditions. Controller 35 is configured to interpret the received value and to determine that the defined condition(s) exist. Accordingly, it will be appreciated that the request to provide oscillatory feedback is not limited to any particular form or type of request.

As described above, in an embodiment, a request to provide oscillatory feedback is based on the existence of one or more defined conditions. The defined conditions may comprise any number of conditions. One such condition relates to the position of the vehicle in the lane in which it is travelling, and comprises detecting that the vehicle is departing (e.g., drifting) from the lane. Another condition relates to driver alertness, and comprises detecting that the driver is drowsy. Other examples of conditions may include, without limitation, the vehicle speed exceeding a particular threshold and a forward alert warning being triggered alerting the driver that the distance or time separation to a vehicle ahead has fallen below a particular threshold value. While several examples of possible conditions have been specifically identified, it will be appreciated that conditions in addition to or in lieu of those identified above may certainly be used for the purposes described herein, as the present invention is not intended to be limited to any particular condition(s).

A determination as to whether one or more defined conditions exist may be made by any number of components or systems of vehicle 4. For example, one or more systems or components 38 of vehicle 4 other than steering system 2 may be configured to determine whether one or more defined conditions exist. These components or systems may be dedicated components or systems or may be shared systems or components configured to perform other functionality (e.g., an electronic vehicle control unit 39). In either instance, systems/component 38, 39 are further configured to provide a notification in one form or another to controller 35 when it is determined that the respective condition(s) exist. Additionally or alternatively, and as briefly described above, controller 35 may be configured to determine whether one or more defined conditions exist. In any instance, a determination as to whether one or more defined conditions exist may be based on information received from one or more systems or components (e.g., sensors) of vehicle 4, including, for example, components of steering system 2, one or more of the vehicle sensors identified herein, and/or other vehicle components/systems, for example, electronic vehicle control unit 39. By way of illustration, an example of a lane departure sensor arrangement that may be used to determine if a lane departure-related condition exists is described in WO2008091565 A1.

In an embodiment, the controller 35 is configured to periodically determine whether a command for oscillatory feedback is needed or is appropriate. Controller 35 may be configured with a routine for determining regularly, e.g. once per second, half second, etc., whether an oscillation command should be sent to motor 18. If appropriate, controller 35 may be further configured to distinguish between distinct variants of a particular defined condition (e.g., different lane departure warning states).

In any event, the oscillation may be imparted by alternation of the direction of, and/or changing, in particular, a pulsed change to, the speed of motor 18. In an embodiment, there is minimal or no net movement of rack bar 12 as a result of the oscillation command applied to rack bar 12. In other words, rack bar 12 may return to its original position after the oscillation, subject to any other movement of rack bar 12, e.g., due to driver steering input and/or steering assistance.

The oscillation command sent by controller 35 includes instructions related to the properties of the oscillation to be imparted by motor 18, including, for example, one or more of timing, frequency and amplitude of the oscillation. The properties of the oscillation are consistent with providing desired oscillatory (e.g., haptic and audible) feedback, in particular structure borne noise or vibration. In an embodiment, an oscillation having a duration in the range of from 0.5 to 3 seconds, for example, in the range of from 1 to 2 seconds, and, in an embodiment, about 1.6 seconds. In an embodiment, the oscillation has a frequency in the range of from 15 to 35 Hz, for example, in the range of from 25 to 27 Hz, and, in an embodiment, about 26 Hz. In an embodiment, the oscillation provides a handled torque in the range of from 0.5 to 5 Nm, for example in the range of from 1 to 3 Nm in steering column 6, and, in an embodiment, about 2 Nm. In an embodiment, the maximum displacement of the steering member (e.g., rack bar 12) by the oscillation is in the range of from 0 to 0.5 mm, for example in the range of from 0 to 0.1 mm, and, in an embodiment, about 0.1 mm, and in another embodiment, about 0.09 mm. It will be appreciated, however, that the present invention is not limited to the property values identified above.

In an embodiment, controller 35 is configured for selecting the sent oscillation command from a plurality of oscillation commands. In this way steering system 2 is configured to offer a range of oscillatory feedback. A list of oscillation commands is stored and mapped against, for example, associated lane departure warnings (or types of warnings other than lane departure warnings, as the case may be) in a look-up table accessible by or within controller 35. Each one of the plurality of oscillation commands comprises instructions related to the properties of its associated oscillation. To enable distinct oscillatory feedback in dependence on distinct conditions, e.g., lane departure warnings, the plurality of oscillation commands comprises a plurality of oscillation commands with differing instructions related to one or more properties of their oscillations.

In an instance wherein rotatable steering column 6 is co-operable with rack bar 12, oscillation of rack bar 12 leads to oscillation of steering column 6, particularly rotary oscillation. In this manner steering system 2 provides for effective oscillatory (e.g., haptic) feedback. In particular, since oscillating force is applied relatively distally, i.e., to rack bar 12 rather than directly to steering column 6 or steering wheel 8, an advantageously realistic oscillatory feedback is achieved, closely simulating feedback received via wheels 16 of the vehicle when driving over, for example, a rumble strip.

In an embodiment, steering system 2 also provides for wider oscillatory feedback through the vehicle structure. In particular, rack bar 12 may be mounted such that the oscillating force can be perceived not only through steering column 6 and steering wheel 8, but also through other vehicle surfaces or structures 40. In an embodiment, rack bar 12 is coupled to steerable wheels 16 of vehicle 4 such that the oscillating force is transferred to vehicle structure 40 via the steering and/or suspension of the vehicle (not shown). This provides the advantage that oscillatory (e.g., haptic) feedback may still be noticeable even if a driver is not touching steering wheel 8.

Controller 35 may be configured for determining a combined actuation command based on the oscillation command and a desired steering assist torque. The controller may advantageously be configured for sending the combined actuation command (comprising the oscillation command and a steering assist torque command) to motor 18 for simultaneously applying assistive torque and imparting an oscillating force to rack bar 12, for example by motor 18 alone. In an embodiment, the oscillation command may be superimposed onto the steering assist torque command, thereby allowing controller 35 to continue to assist steering vehicle 4 at the same time as providing oscillatory feedback to the driver.

In view of the foregoing, it will be appreciated that steering system 2 thus illustrates and is configured to perform or carry out a method of providing oscillatory feedback through a steering system by imparting an oscillating force to a linearly movable steering member of the steering system to which a driver steering input is coupled via a rotatable steering column of the steering system. And in an embodiment, the oscillating force that generates the feedback may be provided using an actuator that simultaneously also provides steering assistance to steering system 2.

It will be appreciated that many modifications can be made to steering system 2 without departing from the scope of the invention as defined in, for example, the appended claims. For example, controller 35 could be configured to command oscillatory feedback in additional or alternative defined conditions. A dedicated actuator could be employed for imparting oscillation to the steering member (e.g., rack bar 12) instead of steering assist motor 18, and/or a hydraulic actuator may be used instead of an electric actuator.

For economy, controller 35 performing the described oscillatory feedback functions in an embodiment also functions as a steering assistance controller (e.g., a controller of an EPAS system). Controller 35 could be further programmed to perform other known control functions within the vehicle, e.g., those of the electronic vehicle control unit 39. It will be appreciated that the electronic vehicle control unit 39 may, in addition to some or all of the functions described above, carry out one or more other control functions of vehicle 4 as known in the art. Alternatively, a dedicated controller not performing any other functions at all, or a controller of an entirely different system of vehicle 4 could be used for the oscillatory feedback system. Controller 35 may thus be implemented as a shared controller of vehicle 4 or as a dedicated controller.

In addition to the functionality described above relating to the provision of oscillatory feedback, controller 35 may also be configured to omit sending the oscillation command, and therefore, to inhibit the provision of oscillatory feedback. In an embodiment, this functionality may be in dependence on an override factor, for example, a sharp turn state. A sharp turn state may be determined when the value of a particular parameter is above a predetermined threshold value. For example, a sharp turn state may be determined when the value of an applied steering torque, which may be received from, for example, a vehicle component/system (e.g., electronic vehicle control unit 39 or one or more vehicle sensors, or from a sensor of steering system 2 (e.g., steering torque sensor 32)) is above a particular steering torque threshold. A sharp turn state may be additionally or alternatively determined when the value of a steering angle-related parameter is above a predetermined threshold value. Examples of steering angle-related parameters that may be used include, for example and without limitation, one or more of a magnitude of a steering angle imparted onto a component of steering system 2 (e.g., steering column 6), a change in an imparted steering angle, or a rate of change in an imparted steering angle, to cite a few possibilities.

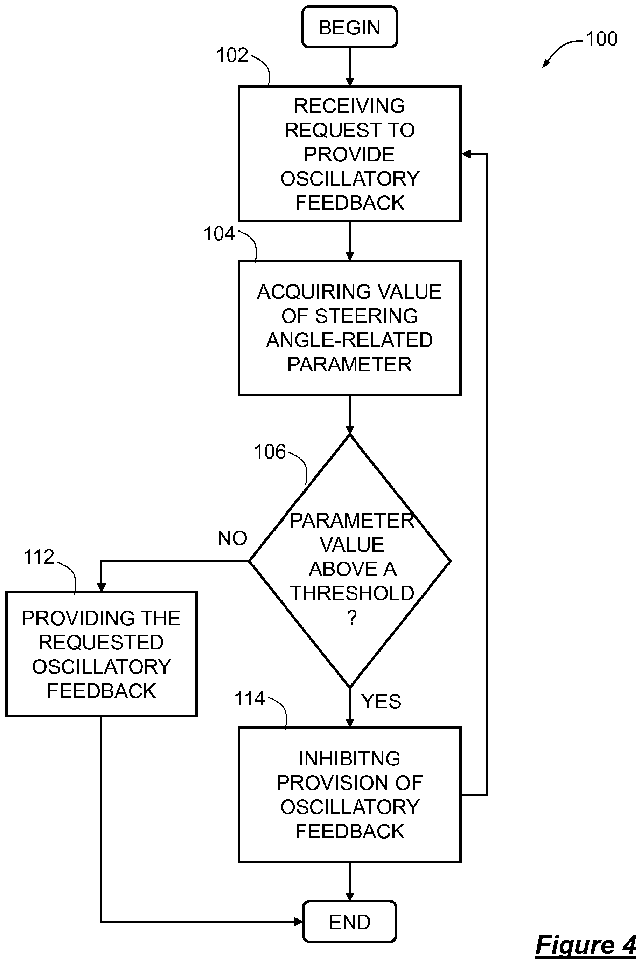

Figure 4 illustrates an exemplary method 100 for controlling the provision oscillatory feedback through the steering system of a vehicle. It will be appreciated that while method 100 will be described in the context of vehicle 4 described above and illustrated in Figures 1-3, and steering system 2 and controller 35 thereof, in particular, application of the methodology is not meant to be limited solely to such an arrangement. Rather, method 100 may find application with any number of arrangements (i.e., the steps of method 100 may be performed by systems or components of vehicle 4 other than that or those described herein, or vehicle arrangements (e.g., steering systems, oscillatory feedback systems, etc.) other than that or those described above (e.g., those oscillatory feedback systems briefly described in the Background section above)). Additionally, it will be appreciated that unless otherwise noted, the performance of method 100 is not meant to be limited to any one particular order or sequence of steps or to any particular component(s) for performing the steps.

In the embodiment illustrated in Figure 4, method 100 comprises a step 102 of receiving a request to provide oscillatory feedback through the steering system of the vehicle (e.g., steering system 2 of vehicle 4). A description of such a request including the different forms it may take and the different sources from which it may be received is set forth above and will not be repeated; rather, it is incorporated here by reference. In an embodiment, the request is received by controller 35 of steering system 2. More particularly, the request may be received at an electrical input of controller 35.

Method 100 further comprises a step 104 of acquiring a value of a steering angle-related parameter. In an embodiment, the value of the steering angle-related parameter indicates the presence of an affirmative or intentional steering input, through, for example, a steering input device (e.g., steering wheel 8) of the vehicle. It will be appreciated that any number of steering angle-related parameters may be used or evaluated in method 100, including, for example and without limitation, one or more of a steering angle imparted onto a component of steering system 2, a change in an imparted steering angle, and/or a rate of change of an imparted steering angle. The value of a steering angle-related parameter of interest may be acquired in step 104 in any number of ways known in the art and depending, at least in part, on the particular parameter being used or evaluated.

For example, in an embodiment, steering angle sensor 33 and/or position sensor 34 may sense or measure a value of the steering angle-related parameter, and one or more electrical signals representative of the sensed or measured parameter may be communicated to, and received at an electrical input of, controller 35 either directly from sensor(s) 33, 34 or indirectly via one or more components of vehicle 4 (e.g., a CAN bus, SMBus, etc.).

In another embodiment, steering angle sensor 33 and/or position sensor 34 may each sense or measure a value of a parameter that is used to derive a value of the steering angle-related parameter of interest. For example, in an embodiment, steering angle sensor 33 is configured to sense or measure an initial steering angle value at the outset of operation of the vehicle (e.g., when, for example, the vehicle is started or put into gear). An electrical signal representative of this initial value may be received by controller 35 at an electrical input thereof and may be stored as a reference or benchmark value in a suitable memory device (e.g., memory device 37). Information from position sensor 34 may also be received by controller 35 at an electrical input thereof, and controller 35 may use that information along with the stored initial steering angle value to determine or derive (e.g., calculate) a steering angle-related parameter of interest (e.g., steering angle, change or rate of change in steering angle, etc.).

Accordingly, it will appreciated that the present invention is not intended to be limited to any particular way(s) in which a value of a steering angle-related parameter of interest is acquired in step 104, as any number of suitable ways may be used.

Following step 104, method 100 includes a step 106 of comparing the acquired steering angle-related value to a predetermined threshold value. In an embodiment, the threshold value comprises a predetermined, empirically-derived value that is programmed into a suitable component of steering system 2 or vehicle 4 (e.g., electronic memory device 37 of controller 35) as part of the manufacturing process of vehicle 4 or steering system 2. In at least some embodiments the threshold value is nonadjustable; while in other embodiments the threshold value may be modified by, for example, a service technician or, in some implementations, the user of vehicle 4.

In some embodiments, a single threshold value may be provided and used in step 106. In other embodiments, however, the threshold value used in step 106 may be selected from a plurality of threshold values, each corresponding to a different value or range of values of a particular vehicle-related parameter. More particularly, the plurality of threshold values may be stored in a look-up table or data structure stored in or on a suitable memory device (e.g., memory device 37) that correlates values or ranges of values of the particular vehicle-related parameter with threshold values. As with an embodiment wherein a single threshold value is used, in an embodiment wherein a plurality of threshold values may be provided, each value comprises a predetermined, empirically-derived value that is programmed into, for example, electronic memory device 37 or another suitable component of steering system 2 or vehicle 4 as part of the manufacturing process of vehicle 4 or steering system 2.

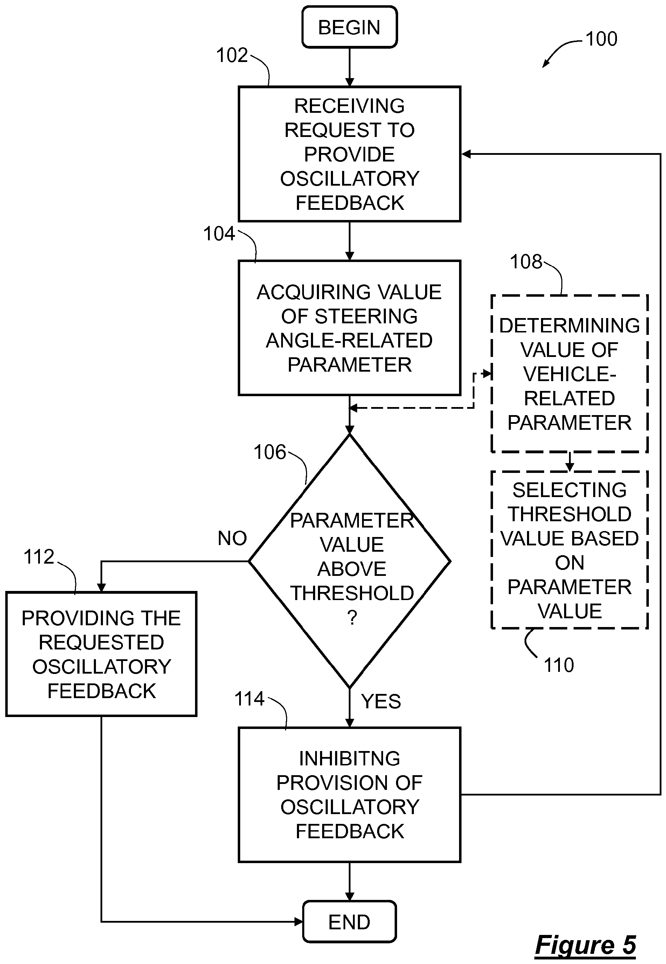

In any event, and with reference to Figure 5, in an embodiment wherein a plurality of threshold values are provided, step 106 may comprise a substep 108 of determining a value of the vehicle-related parameter, and a substep 110 of selecting the threshold value from the plurality of threshold values that corresponds to the determined parameter value (i.e., selecting the threshold value in dependence on the determined parameter value). More particularly, in substep 108, one or more electrical signals may be received from, for example, a sensor or other component/system of steering system 2 or vehicle 4 that is/are representative of, or that may be used to determine or derive, a value of the vehicle-related parameter. In an embodiment, the electrical signal(s) may be received at an electrical input of controller 35, and may be communicated to controller 35 either directly or indirectly via one or more components of vehicle 4 (e.g., a CAN bus, SMBus, etc.). In substep 110, the value determined in substep 108 may be looked up in the look-up table containing the plurality of threshold values, and the threshold value corresponding to the determined value may be obtained or acquired.

Any number of vehicle-related parameters may be evaluated in substep 108 and used to determine or select a threshold value in substep 110. In an embodiment, the vehicle-related parameter comprises vehicle speed such that different thresholds are provided for different speeds or ranges of speeds of the vehicle. It will be appreciated, however, that in other embodiments, a plurality of thresholds corresponding to additional or alternative vehicle-related parameters may certainly be used.

Regardless of the number of thresholds that may be provided, in an embodiment, controller 35, and processor 36 thereof in particular, is configured to access or obtain/select the appropriate threshold value and to perform step 106.

The particular step method 100 proceeds to following the comparison performed in step 106 is dependent upon the outcome of that comparison. As shown in Figures 4 and 5, if the value of the steering angle-related parameter is below (or, in an embodiment, meets or is below the threshold value), method 100 may move to a step 112 of providing the oscillatory feedback requested in step 102. Accordingly, controller 35 may control or command assistive torque motor 18 of steering system 2 to provide the requested feedback (e.g., may send an oscillation command to motor 18).

If, on the other hand, the value of the steering angle-related parameter is above (or, in an embodiment, meets or is above) the threshold value, it can be determined or assumed that the vehicle is under the control of the driver, and method 100 may then proceed to a step 114 of inhibiting the provision of oscillatory feedback that would ordinarily be provided in dependence on the request received in step 102 (or commanding that such feedback be inhibited). In other words, if it is determined in step 106 that the steering angle-related parameter value is above the predetermined threshold, which may be indicative of a sharp turn state, controller 35 does not command, or inhibits, the application of an oscillation force by motor 18 of steering system 2, and therefore, does not command, or inhibits, the provision of oscillatory feedback.

While only a steering angle-related parameter value is used to determine whether to provide or inhibit oscillatory feedback in the embodiment of method 100 described above, in other embodiments, values of one or more other vehicle-related parameters may be optionally taken into consideration prior to providing or inhibiting oscillatory feedback in steps 112, 114, respectively. One such parameter is steering torque, and in particular, an amount of amount of steering torque that is being applied in dependence on a driver steering input.

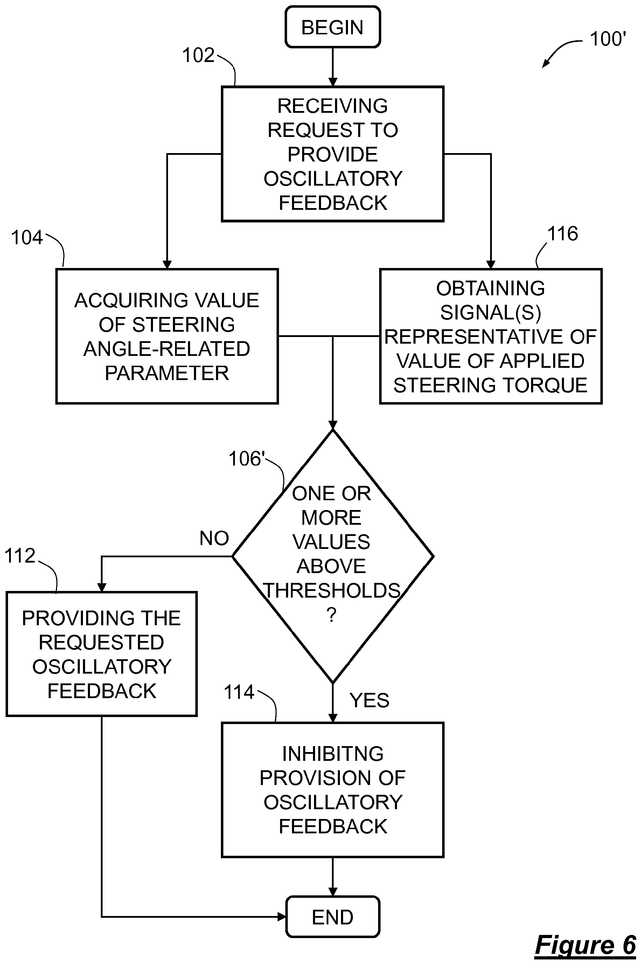

Accordingly, in an embodiment such as that illustrated in Figure 6, method 100 (i.e., method 100') may include a step 116 of obtaining an electrical signal representative of a value of an applied steering torque. In an embodiment, the value of the applied steering torque indicates the presence of an affirmative or intentional steering input through, for example, a steering input device (e.g., steering wheel 8) of the vehicle. The electrical signal may be obtained in a number of ways. In an embodiment, steering torque sensor 32 senses or measures the amount of applied torque, and an electrical signal representative of that sensed or measured value is communicated to controller 35 either directly from steering torque sensor 32 or indirectly via one or more components of vehicle 4 (e.g., a CAN bus, SMBus, proprietary communication link). In another embodiment, the value of the applied steering torque may determined by vehicle control unit 39 or another component 38 of vehicle 4 other than steering system 2 or controller 35 thereof, which then, in turn, communicates an electrical signal representative of the applied steering torque value to controller 35. It will therefore be appreciated that the present invention is not intended to be limited to any particular way(s) in which an electrical signal representative of a value of an applied steering torque is obtained, as any number of suitable ways may be used. In an embodiment, the electrical signal representative of the applied torque value is obtained by controller 35 at an electrical input thereof.

In an embodiment wherein method 100' includes step 116, step 106 (i.e., step 106') comprises comparing the steering angle-related parameter value acquired in step 104 to a predetermined threshold as described in detail above, and also comprises comparing the applied steering torque value obtained in step 116 to a predetermined steering torque threshold value. The steering torque threshold value may be stored in an electronic memory device of, or accessible by, controller 35 (e.g., electronic memory device 37), and in an embodiment, is a vehicle type- or platform-specific threshold value meaning that different vehicle types or platforms may use different threshold values. In an embodiment, the threshold value is a predetermined, empirically-derived value that is programmed into a suitable component of steering system 2 or vehicle 4 (e.g., electronic memory device 37 of controller 35) as part of the manufacturing process of vehicle 4 or steering system 2. In at least some embodiments the threshold value is nonadjustable; while in other embodiments the threshold value may be modified by, for example, a service technician or, in some implementations, the user of vehicle 4. In any event, in an embodiment, controller 35, and processor 36 thereof in particular, is configured to perform the comparison of step 106'.

In an embodiment, step 116 may be performed substantially simultaneous with the performance of step 104 described above. In other embodiments, however, step 116 may be performed after the performance of step 104, or vice versa. Additionally, while in the embodiment described above, step 106' comprises comparing both the steering angle-related parameter value and the steering torque value to respective thresholds, in other embodiments, the comparison of the value of one parameter (e.g., steering angle-related parameter value) to a respective threshold may be made only if the comparison of the value of the other parameter (e.g., steering torque value) to a respective threshold reveals that the parameter value is below the threshold to which it was compared. By way of illustration, in an embodiment, a comparison of a steering angle-related parameter value to a respective threshold value is only performed if it is determined that the steering torque value is below the threshold to which it was compared. Accordingly, the present invention is not limited to any particular order of performing (if at all) the steps of method 100.

In any event, in an embodiment wherein both a steering angle-related parameter and an applied steering torque are evaluated and compared to respective threshold values, method 100 may proceed to step 112 of providing (or commanding the application of) oscillatory feedback when both of the steering angle-related parameter and applied steering torque values are below the thresholds to which they were compared. Conversely, method 100 may proceed to step 114 of inhibiting (or commanding the inhibition of) oscillatory feedback when either one or both of the steering angle-related parameter and applied steering torque values are above the thresholds to which they were compared.

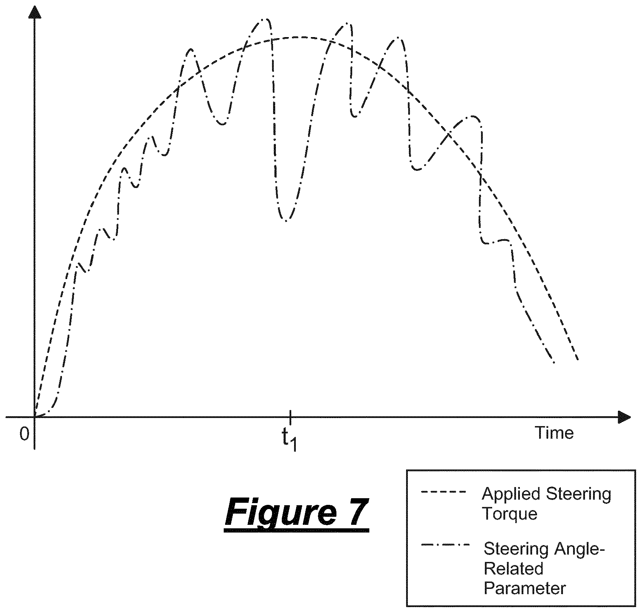

One reason it may be advantageous to consider a steering angle-related parameter along with the applied steering torque as described above is that in some instances wherein the vehicle is under the control of the driver, the value of one parameter may nevertheless not reflect such driver control. Consequently, if that parameter is the sole parameter being evaluated, oscillatory feedback may be undesirably provided even though the vehicle is, in fact, being controlled by the driver. By way of illustration, Figure 7 depicts a graph of simulated data in the nature of an applied steering torque and a steering angle-related parameter over time during a cornering event of a vehicle. At time t₁, there is a significant drop in applied steering torque. This may be the result of, for example, the maximum steering angle being reached at which point the steering torque drops off, a road input that serves to counteract or cancel out a steering torque corresponding to a user steering input, etc. While there is at least a momentary dip or drop in the applied steering torque, the steering angle-related parameter is at its highest value. Accordingly, if, the steering angle-related parameter alone was to be evaluated as described above at time t₁, then it is possible that the value of the steering angle-related parameter may be above the threshold to which it was compared, and thus, oscillatory feedback may be inhibited. If, on the other hand, the steering torque alone was to be evaluated as described above at time t₁, then it is possible that the steering torque value may be below the threshold to which it was compared, and thus, oscillatory feedback may be provided even though the steering angle-related parameter would suggest that it not be. Accordingly, in an embodiment wherein multiple parameters may be evaluated, a more accurate evaluation may be performed and a more accurate determination made as to whether to inhibit or provide oscillatory feedback.

It will be understood that the embodiments described above are given by way of example only and are not intended to limit the invention, the scope of which is defined in the appended claims. The invention is not limited to the particular embodiment(s) disclosed herein, but rather is defined solely by the claims below. Furthermore, the statements contained in the foregoing description relate to particular embodiments and are not to be construed as limitations on the scope of the invention or on the definition of terms used in the claims, except where a term or phrase is expressly defined above. Various other embodiments and various changes and modifications to the disclosed embodiment(s) will become apparent to those skilled in the art. For example, the specific combination and order of steps is just one possibility, as the present method may include a combination of steps that has fewer, greater or different steps than that shown here. All such other embodiments, changes, and modifications are intended to come within the scope of the appended claims. Additionally, features, characteristics, or aspects described in conjunction with one embodiment are to be understood to be applicable to any other embodiment described herein unless incompatible therewith.

As used in this specification and claims, the terms "for example," "e.g.," "for instance," "such as," and "like," and the verbs "comprising," "having," "including," and their other verb forms, when used in conjunction with a listing of one or more components or other items, are each to be construed as open-ended, meaning that that the listing is not to be considered as excluding other, additional components or items. Further, the terms "comprise" and "contain" and variations thereof, for example "comprising" and "comprises", mean "including but not limited to", and are not intended to (and do not) exclude other possibilities not expressly provided for herein. Moreover the singular encompasses the plural unless the context otherwise requires: in particular, where the indefinite article is used, the specification is to be understood as contemplating plurality as well as singularity, unless the context requires otherwise. Other terms are to be construed using their broadest reasonable meaning unless they are used in a context that requires a different interpretation.

## Claims

1. A method for controlling the provision of oscillatory feedback through a steering system of a vehicle, comprising:
receiving a request to provide oscillatory feedback through the steering system of the vehicle;
acquiring a value of a steering angle-related parameter;
obtaining a value of an applied steering torque;
comparing the value of the steering angle-related parameter to a predetermined threshold value;
comparing the value of the applied steering torque to a predetermined steering torque threshold value; and
when the value of one or both of the steering angle-related parameter and the applied steering torque is above the predetermined threshold values to which they are compared, automatically inhibiting the provision of the oscillatory feedback.

2. The method of claim 1, wherein the acquiring step comprises obtaining one or more electrical signals representative of the value of the steering angle-related parameter, optionally wherein the acquiring step comprises calculating the value of the steering angle-related parameter.

3. The method of any one of the preceding claims, comprising:
determining a value of a vehicle-related parameter; and
selecting the predetermined threshold value to be used from a plurality of threshold values in dependence on the determined vehicle-related parameter value, preferably wherein the oscillatory feedback comprises haptic feedback.

4. The method of any one of the preceding claims, wherein when the steering angle-related parameter value is below the predetermined threshold, the method comprises commanding the provision of the requested oscillatory feedback through the steering system, and further wherein the commanding step is performed by an electronic controller of an electric power assisted steering (EPAS) system, and/or wherein the steering angle-related parameter comprises one of:
a measured steering angle imparted onto a component of the steering system;
a change in a steering angle imparted onto a component of the steering system; and
a rate of change in a steering angle imparted onto a component of the steering system.

5. The method of any one of the preceding claims, wherein the obtaining step comprises:
obtaining an electrical signal representative of a value of an applied steering torque.

6. A non-transitory, computer-readable storage medium storing instructions thereon that when executed by one or more electronic processors causes the one or more electronic processors to carry out the method of any one of the preceding claims.

7. A system for controlling the provision of oscillatory feedback through a steering system of a vehicle, comprising:
means for receiving a request to provide oscillatory feedback through the steering system of the vehicle;
means for acquiring a value of a steering angle-related parameter;
means for obtaining a value of an applied steering torque;
means for comparing the value of the steering angle-related parameter to a predetermined threshold value;
means for comparing the value of the applied steering torque to a predetermined steering torque threshold value; and
means for automatically inhibiting the provision of the oscillatory feedback when the value of one or both of the steering angle-related parameter and the applied steering torque is above the predetermined threshold values to which they are compared.

8. The system of claim 7, wherein the receiving, acquiring, comparing, and inhibiting means comprise:
an electronic processor having one or more electrical inputs; and
an electronic memory device electrically coupled to the electronic processor and having instructions stored therein,
wherein the electronic processor is configured to access the memory device and execute the instructions stored therein such that it is configured to:
receive the request to provide oscillatory feedback;
acquire the value of the steering angle-related parameter;
compare the value of the steering angle-related parameter to the predetermined threshold value; and
automatically inhibit the provision of the oscillatory feedback when the value of the steering angle-related parameter is above the predetermined threshold value.

9. The system of claim 8, wherein the electronic processor is configured to:
obtain an electrical signal representative of a value of an applied steering torque;
compare the value of the applied steering torque to a predetermined steering torque threshold value; and
automatically inhibit the provision of the oscillatory feedback when one or both of the applied steering torque and the steering angle-related parameter are above the predetermined threshold values to which they are compared.

10. The system of claim 8 or claim 9, wherein the electronic processor is configured to:
determine a value of a vehicle-related parameter; and
select the predetermined threshold value to be used from a plurality of threshold values in dependence on the determined vehicle-related parameter value, and/or wherein
when the steering angle-related parameter value is below the predetermined threshold, the electronic processor is configured to command the provision of the requested oscillatory feedback through the steering system, and further wherein the electronic processor comprises an electronic processor of an electric power assisted steering (EPAS) system controller.

11. The system of claim any one of claims 7 to 10, wherein acquiring the value of the steering angle-related parameter comprises:
obtaining one or more electrical signals representative of the value of the steering angle-related parameter, or
calculating the value of the steering angle-related parameter.

12. The system of any one of claims 7 to 11, wherein the steering angle-related parameter comprises one of:
a measured steering angle imparted onto a component of the steering system;
a change in a steering angle imparted onto a component of the steering system; and
a rate of change in a steering angle imparted onto a component of the steering system.

13. An electronic controller for a vehicle having a storage medium associated therewith storing instructions therein that when executed by the controller causes the controlling of the provision of oscillatory feedback through a steering system of the vehicle in accordance with the method of:
receiving a request to provide oscillatory feedback through the steering system of the vehicle;
acquiring a value of a steering angle-related parameter;
obtaining a value of an applied steering torque;
comparing the value of the steering angle-related parameter to a predetermined threshold value;
comparing the value of the applied steering torque to a predetermined steering torque threshold value; and
when the value of one or both of the steering angle-related parameter and the applied steering torque is above the predetermined threshold values to which they are compared, automatically inhibiting the provision of the oscillatory feedback.

14. The electronic controller of claim 13, wherein the controller comprises a controller of an electric power assisted steering (EPAS) system.

15. A vehicle, vehicle steering system or electric power assisted steering system for a vehicle comprising the system of any one of claims 7 to 12, or the electronic controller of claim 13 or 14.

## Patentansprüche

1. Verfahren zum Steuern der Bereitstellung von Schwingungsfeedback durch ein Lenkungssystem eines Fahrzeugs, Folgendes umfassend:
Empfangen einer Anfrage zum Bereitstellen von Schwingungsfeedback durch das Lenkungssystem des Fahrzeugs;
Erfassen eines Wertes eines auf den Lenkungswinkel bezogenen Parameters;
Erhalten eines Wertes eines angewendeten Lenkungsdrehmoments;
Vergleichen des Wertes des auf den Lenkungswinkel bezogenen Parameters mit einem vorgegebenen Grenzwert;
Vergleichen des Wertes des angewendeten Lenkungsdrehmoments mit einem vorgegebenen Lenkungsdrehmomentgrenzwert; und
wenn der Wert eines oder beider des auf den Lenkungswinkel bezogenen Parameters und des angewendeten Lenkungsdrehmoments über den vorgegebenen Grenzwerten liegen, mit denen sie verglichen werden, automatisches Verhindern der Bereitstellung des Schwingungsfeedbacks.

2. Verfahren nach Anspruch 1, wobei der Erfassungsschritt das Erhalten eines oder mehrerer elektrischer Signale umfasst, die den Wert des auf den Lenkungswinkel bezogenen Parameters darstellen, optional wobei der Erfassungsschritt das Berechnen des Wertes des auf den Lenkungswinkel bezogenen Parameters umfasst.

3. Verfahren nach einem der vorhergehenden Ansprüche,
Folgendes umfassend: Bestimmen eines Wertes eines auf ein
Fahrzeug bezogenen Parameters; und
Auswählen des vorgegebenen Grenzwertes, um von mehreren Grenzwerten in Abhängigkeit von dem bestimmten auf ein Fahrzeug bezogenen Parameterwert verwendet zu werden, vorzugsweise wobei das Schwingungsfeedback ein haptisches Feedback umfasst.

4. Verfahren nach einem der vorhergehenden Ansprüche, wobei, wenn der auf einen Lenkungswinkel bezogene Parameterwert unter dem vorgegebenen Grenzwert liegt, das Verfahren das Befehlen der Bereitstellung des angefragten Schwingungsfeedbacks durch das Lenkungssystem umfasst, und ferner wobei der Befehlsschritt durch eine elektronische Steuervorrichtung eines elektrischen Servolenkungs(*electric power assisted steering -* EPAS)systems durchgeführt wird, und/oder wobei der auf den Lenkungswinkel bezogene Parameter Folgendes umfasst:
einen gemessenen Lenkungswinkel, der auf einen Bestandteil des Lenkungssystems übertragen wird;
eine Veränderung in einem Lenkungswinkel, die auf einen Bestandteil des Lenkungssystems übertragen wird; oder
eine Veränderungsrate in einem Lenkungswinkel, die auf einen Bestandteil des Lenkungssystems übertragen wird.

5. Verfahren nach einem der vorhergehenden Ansprüche, wobei der Erhaltungsschritt Folgendes umfasst:
Erhalten eines elektrischen Signals, das einen Wert eines angewendeten Lenkungsdrehmoments darstellt.

6. Nichtflüchtiges, computerlesbares Speichermedium, auf dem Anweisungen gespeichert sind, die, wenn sie von einem oder mehreren elektronischen Prozessoren ausgeführt werden, bewirken, dass der eine oder die mehreren elektronischen Prozessoren das Verfahren nach einem der vorhergehenden Ansprüche ausführen.

7. System zum Steuern der Bereitstellung von Schwingungsfeedback durch ein Lenkungssystem eines Fahrzeugs, Folgendes umfassend:
Mittel zum Empfangen einer Anfrage zum Bereitstellen von Schwingungsfeedback durch das Lenkungssystem des Fahrzeugs;
Mittel zum Erfassen eines Wertes eines auf den Lenkungswinkel
bezogenen Parameters;
Mittel zum Erhalten eines Wertes eines angewendeten
Lenkungsdrehmoments;
Mittel zum Vergleichen des Wertes des auf den Lenkungswinkel bezogenen Parameters mit einem vorgegebenen Grenzwert;
Mittel zum Vergleichen des Wertes des angewendeten Lenkungsdrehmoments mit einem vorgegebenen Lenkungsdrehmomentgrenzwert; und
Mittel zum automatischen Verhindern der Bereitstellung von Schwingungsfeedback, wenn der Wert eines oder beider des auf den Lenkungswinkel bezogenen Parameters und des angewendeten Lenkungsdrehmoments über den vorgegebenen Grenzwerten liegen, mit denen sie verglichen werden.

8. System nach Anspruch 7, wobei die Empfangs-, Erfassungs-, Vergleichs- und Verhinderungsmittel Folgendes umfassen:
einen elektronischen Prozessor mit einem oder mehreren elektrischen Eingängen; und
eine elektronische Speichervorrichtung, die elektrisch mit dem elektronischen Prozessor gekoppelt ist und darin gespeicherte Anweisungen aufweist,
wobei der elektronische Prozessor konfiguriert ist, auf die Speichervorrichtung zuzugreifen und die darin gespeicherten Anweisungen derart auszuführen, dass er konfiguriert ist zum:
Empfangen der Anforderung zum Bereitstellen von Schwingungsfeedback;
Erfassen des Wertes des auf einen Lenkungswinkel bezogenen Parameters;
Vergleichen des Wertes des auf den Lenkungswinkel bezogenen Parameters mit dem vorgegebenen Grenzwert; und
automatisches Verhindern der Bereitstellung des Schwingungsfeedbacks, wenn der Wert des auf den Lenkungswinkel bezogenen Parameters über dem vorgegebenen Grenzwert liegt.

9. System nach Anspruch 8, wobei der elektronische Prozessor für Folgendes konfiguriert ist: Erhalten eines elektrischen Signals, das einen Wert eines angewendeten Lenkungsdrehmoments darstellt; Vergleichen des Wertes des angewendeten Lenkungsdrehmoments mit einem vorgegebenen Lenkungsdrehmomentgrenzwert; und
automatisches Verhindern der Bereitstellung des Schwingungsfeedbacks, wenn einer oder beide des angewendeten Lenkungsdrehmoments und des auf den Lenkungswinkel bezogenen Parameters über den vorgegebenen Grenzwerten liegen, mit denen sie verglichen werden.

10. System nach Anspruch 8 oder 9, wobei der elektronische Prozessor zu Folgendem konfiguriert ist: Bestimmen eines Wertes eines auf ein Fahrzeug bezogenen Parameters; und
Auswählen des vorgegebenen Grenzwertes, um von mehreren Grenzwerten in Abhängigkeit von dem bestimmten auf ein Fahrzeug bezogenen Parameterwert verwendet zu werden, und/oder wobei, wenn der auf den Lenkungswinkel bezogene Parameterwert unter dem vorgegebenen Grenzwert liegt, der elektronische Prozessor konfiguriert ist, die Bereitstellung des angefragten Schwingungsfeedbacks durch das Lenkungssystem zu befehlen, und ferner, wobei der elektronische Prozessor einen elektronischen Prozessor einer elektrischen Servolenkungs(EPAS)systemsteuervorrichtung umfasst.

11. System nach einem der Ansprüche 7 bis 10, wobei das Erfassen des Wertes des auf den Lenkungswinkel bezogenen Parameters Folgendes umfasst:
Erhalten eines oder mehrerer elektrischer Signale, die den Wert des auf den Lenkungswinkel bezogenen Parameters darstellen, oder
Berechnen des Wertes des auf einen Lenkungswinkel bezogenen Parameters.

12. System nach einem der Ansprüche 7 bis 11, wobei der auf den Lenkungswinkel bezogene Parameter Folgendes umfasst:
einen gemessenen Lenkungswinkel, der auf einen Bestandteil des Lenkungssystems übertragen wird; eine Veränderung in einem Lenkungswinkel, die auf einen Bestandteil des Lenkungssystems übertragen wird; oder eine Veränderungsrate in einem Lenkungswinkel, die auf einen Bestandteil des Lenkungssystems übertragen wird.

13. Elektronische Steuervorrichtung für ein Fahrzeug mit einem damit verknüpften Speichermedium, das Anweisungen darin speichert, die, wenn sie durch die Steuervorrichtung ausgeführt werden, das Steuern der Bereitstellung des Schwingungsfeedbacks durch ein Lenkungssystem des Fahrzeugs gemäß dem Verfahren bewirken:
Empfangen einer Anfrage zum Bereitstellen von Schwingungsfeedback durch das Lenkungssystem
des Fahrzeugs;
Erfassen eines Wertes eines auf den Lenkungswinkel bezogenen Parameters;
Erhalten eines Wertes eines angewendeten Lenkungsdrehmoments;
Vergleichen des Wertes des auf den Lenkungswinkel bezogenen Parameters mit einem vorgegebenen Grenzwert;
Vergleichen des Wertes des angewendeten Lenkungsdrehmoments mit einem vorgegebenen Lenkungsdrehmomentgrenzwert; und
wenn der Wert eines oder beider des auf den Lenkungswinkel bezogenen Parameters und des angewendeten Lenkungsdrehmoments über den vorgegebenen Grenzwerten liegen, mit denen sie verglichen werden, automatisches Verhindern der Bereitstellung des Schwingungsfeedbacks.

14. Elektrische Steuervorrichtung nach Anspruch 13, wobei die Steuervorrichtung eine Steuervorrichtung
eines elektrischen Servolenkungs(EPAS)systems umfasst.

15. Fahrzeug, Fahrzeuglenkungssystem oder elektrisches Servolenkungssystem für ein Fahrzeug, das System nach einem der Ansprüche 7 bis 12 oder die elektronische Steuervorrichtung nach Anspruch 13 oder 14 umfassend.

## Revendications

1. Procédé permettant de commander la fourniture d'une rétroaction oscillatoire par l'intermédiaire d'un système de direction d'un véhicule, le procédé comprenant :
la réception d'une demande de fourniture de rétroaction oscillatoire par l'intermédiaire du système de direction du véhicule ;
l'acquisition d'une valeur d'un paramètre lié à l'angle de braquage ;
l'obtention d'une valeur d'un couple de braquage appliqué ;
la comparaison de la valeur du paramètre lié à l'angle de braquage à une valeur seuil prédéterminée ;
la comparaison de la valeur du couple de braquage appliqué à une valeur seuil prédéterminée de couple de braquage ; et
lorsque la valeur du paramètre lié à l'angle de braquage et/ou la valeur du couple de braquage appliqué sont supérieures aux valeurs seuil prédéterminées auxquelles elles sont comparées, l'empêchement automatique de la fourniture de la rétroaction oscillatoire.

2. Procédé selon la revendication 1, dans lequel l'étape d'acquisition comprend l'obtention d'au moins un signal électrique représentatif de la valeur du paramètre lié à l'angle de braquage, éventuellement dans lequel l'étape d'acquisition comprend le calcul de la valeur du paramètre lié à l'angle de braquage.

3. Procédé selon l'une quelconque des revendications précédentes, comprenant :
la détermination d'une valeur d'un paramètre lié au véhicule ; et
la sélection de la valeur seuil prédéterminée à utiliser parmi une pluralité de valeurs seuil en fonction de la valeur de paramètre lié au véhicule déterminée, de préférence dans lequel la rétroaction oscillatoire comprend une rétroaction haptique.

4. Procédé selon l'une quelconque des revendications précédentes, dans lequel, lorsque la valeur de paramètre lié à l'angle de braquage est inférieure au seuil prédéterminé, le procédé comprend la commande de la fourniture de la rétroaction oscillatoire demandée par l'intermédiaire du système de direction, et en outre dans lequel l'étape de commande est effectuée par un dispositif de commande électronique d'un système de direction assistée électrique (EPAS), et/ou dans lequel le paramètre lié à l'angle de braquage comprend l'un parmi :
un angle de braquage mesuré communiqué à un composant du système de direction ;
une variation d'un angle de braquage communiqué à un composant du système de direction ; et
un taux de variation d'un angle de braquage communiqué à un composant du système de direction.

5. Procédé selon l'une quelconque des revendications précédentes, dans lequel l'étape d'obtention comprend :
l'obtention d'un signal électrique représentatif d'une valeur d'un couple de braquage appliqué.

6. Support d'informations non transitoire lisible par ordinateur sur lequel sont stockées des instructions qui, lorsqu'elles sont exécutées par un ou plusieurs processeurs électroniques, amènent le ou plusieurs processeurs électroniques à mettre en oeuvre le procédé selon l'une quelconque des revendications précédentes.

7. Système permettant de commander la fourniture d'une rétroaction oscillatoire par l'intermédiaire d'un système de direction d'un véhicule, le système comprenant :
des moyens de réception d'une demande de fourniture de rétroaction oscillatoire par l'intermédiaire du système de direction du véhicule ;
des moyens d'acquisition d'une valeur d'un paramètre lié à l'angle de braquage ;
des moyens d'obtention d'une valeur d'un couple de braquage appliqué ;
des moyens de comparaison de la valeur du paramètre lié à l'angle de braquage à une valeur seuil prédéterminée ;
des moyens de comparaison de la valeur du couple de braquage appliqué à une valeur seuil prédéterminée de couple de braquage ; et
des moyens d'empêchement automatique de la fourniture de la rétroaction oscillatoire lorsque la valeur du paramètre lié à l'angle de braquage et/ou la valeur du couple de braquage appliqué sont supérieures aux valeurs seuil prédéterminées auxquelles elles sont comparées.

8. Système selon la revendication 7, dans lequel les moyens de réception, d'acquisition, de comparaison et d'empêchement comprennent :
un processeur électronique ayant une ou plusieurs entrées électriques ; et
un dispositif de mémoire électronique couplé électriquement au processeur électronique et sur lequel des instructions sont stockées,
dans lequel le processeur électronique est configuré pour accéder au dispositif de mémoire et pour exécuter les instructions stockées sur celui-ci de telle sorte qu'il soit configuré pour :
recevoir la demande de fourniture de rétroaction oscillatoire ;
acquérir la valeur du paramètre lié à l'angle de braquage ;
comparer la valeur du paramètre lié à l'angle de braquage à la valeur seuil prédéterminée ; et
empêcher automatiquement la fourniture de la rétroaction oscillatoire lorsque la valeur du paramètre lié à l'angle de braquage est supérieure à la valeur seuil prédéterminée.

9. Système selon la revendication 8, dans lequel le processeur électronique est configuré pour :
obtenir un signal électrique représentatif d'une valeur d'un couple de braquage appliqué ;
comparer la valeur du couple de braquage appliqué à une valeur seuil prédéterminée de couple de braquage ; et
empêcher automatiquement la fourniture de la rétroaction oscillatoire lorsque l'angle de braquage appliqué et/ou le paramètre lié à l'angle de braquage sont supérieurs aux valeurs seuil prédéterminées auxquelles ils sont comparés.

10. Système selon la revendication 8 ou 9, dans lequel le processeur électronique est configuré pour :
déterminer une valeur d'un paramètre lié au véhicule ; et
sélectionner la valeur seuil prédéterminée à utiliser parmi une pluralité de valeurs seuil en fonction de la valeur de paramètre lié au véhicule déterminée, et/ou dans lequel
lorsque la valeur de paramètre lié à l'angle de braquage est inférieure au seuil prédéterminé, le processeur électronique est configuré pour commander la fourniture de la rétroaction oscillatoire demandée par l'intermédiaire du système de direction, et en outre dans lequel le processeur électronique comprend un processeur électronique d'un dispositif de commande de système de direction assistée électrique (EPAS).

11. Système selon l'une quelconque des revendications 7 à 10, dans lequel l'acquisition de la valeur du paramètre lié à l'angle de braquage comprend :
l'obtention d'un ou plusieurs signaux électriques représentatifs de la valeur du paramètre lié à l'angle de braquage, ou
le calcul de la valeur du paramètre lié à l'angle de braquage.

12. Système selon l'une quelconque des revendications 7 à 11, dans lequel le paramètre lié à l'angle de braquage comprend l'un parmi :
un angle de braquage mesuré communiqué à un composant du système de direction ;
une variation d'un angle de braquage communiqué à un composant du système de direction ; et
un taux de variation d'un angle de braquage communiqué à un composant du système de direction.

13. Dispositif de commande électronique pour un véhicule ayant un support d'informations associé à celui-ci et sur lequel sont stockées des instructions qui, lorsqu'elles sont exécutées par le dispositif de commande, provoquent la commande de la fourniture d'une rétroaction oscillatoire par l'intermédiaire d'un système de direction du véhicule conformément au procédé :
de réception d'une demande de fourniture de rétroaction oscillatoire par l'intermédiaire du système de direction du véhicule ;
d'acquisition d'une valeur d'un paramètre lié à l'angle de braquage ;
d'obtention d'une valeur d'un couple de braquage appliqué ;
de comparaison de la valeur du paramètre lié à l'angle de braquage à une valeur seuil prédéterminée ;
de comparaison de la valeur du couple de braquage appliqué à une valeur seuil prédéterminée de couple de braquage ; et
lorsque la valeur du paramètre lié à l'angle de braquage et/ou la valeur du couple de braquage appliqué sont supérieures aux valeurs seuil prédéterminées auxquelles elles sont comparées, d'empêchement automatique de la fourniture de la rétroaction oscillatoire.

14. Dispositif de commande électronique selon la revendication 13, dans lequel le dispositif de commande comprend un dispositif de commande d'un système de direction assistée électrique (EPAS).

15. Véhicule, système de direction de véhicule ou système de direction assistée électrique pour un véhicule comprenant le système selon l'une quelconque des revendications 7 à 12, ou le dispositif de commande électronique selon la revendication 13 ou 14.
